# EUROPEAN PATENT APPLICATION

(11) **EP 2 418 563 A2**
(43) Date of publication of application: **15.02.2012**
(21) Application number: 11174444.7
(22) Date of filing: 19.07.2011
(51) Int. Cl.: G06F 3/01

(54) **User equipment, server, and method for selectively filtering augmented reality**

(30) Priority: 12.08.2010 KR 20100077897
(71) Applicant: Pantech Co., Ltd., Seoul 121-270 (KR)
(72) Inventor: Lee, Charng Gwon, 121-270 Seoul (KR); Ryu, Jin Woo, 121-270 Seoul (KR); Shin, Su Jung, 121-270 Seoul (KR); Yoo, Yun Jung, 121-270 Seoul (KR); Lee, Chang Ju, 121-270 Seoul (KR); Jeon, Kyoung Hun, 121-270 Seoul (KR); Hong, Jin Hyun, 121-270 Seoul (KR)
(74) Representative: Herzog, Markus

(57) **Abstract**

An augmented reality filter selecting user equipment, includes a display unit display to display a real image including a target object and a plurality of filter icons, a user input unit to receive a user command, the user command including a selection of a target filter icon and a movement of the target filter icon, and a control unit to control the display unit to display the target object and filtered AR information corresponding to the target object. A method for selecting a filter includes displaying a real image including a target object and a plurality of filter icons, receiving a command to select a target filter icon, applying the target filter icon by moving the selected target filter icon onto a target object on the displayed image, and displaying the target object and information corresponding to the target object, in which the target filter icon is applied.

## Description

### CROSS-REFERENCE TO RELATED APPLICATION

This application claims priority from and the benefit under 35 U.S.C. §119(a) of Korean Patent Application No. 10-2010-0077897, filed on August 12, 2010, which is hereby incorporated by reference for all purposes as if fully set forth herein.

### BACKGROUND OF THE INVENTION

FIELD

The disclosure relates to a user equipment, a server, and a method for augmented reality (AR) for selecting a filter, and more particularly, to a user equipment, a server for augmented reality (AR) , and a method for selecting a filter to apply selective filtering to an object selected by the user.

DISCUSSION OF THE BACKGROUND

Augmented reality (AR) technology refers to a computer graphic technology for combining a real environment with an artificial object or information. Unlike conventional virtual reality technologies based on virtual space and a virtual object only, the AR technology combines a real environment with an artificial object or information, thereby adding supplementary information that may be difficult to obtain in the real world. The AR technology may apply a filter to an object identified in the real environment to separate artificial objects or information from the obtained object.

However, conventionally, a user may be unable to apply a specific filter to a specific object, and instead may apply the same filter to the whole image, so that the user may be unable to obtain specific information. Also, the user may use a filter provided by an augmented reality service provider, but may be unable to designate and use a specific filter. As a result, if the user tries to obtain specific filtered information, the user may suffer from the inconvenience of applying a plurality of filters to objects one by one.

### SUMMARY

Exemplary embodiments of the present invention provide an AR filter selecting user equipment, a server, and a method for selecting an augmented reality filter.

Additional features of the invention will be set forth in the description which follows, and in part will be apparent from the description, or may be learned by practice of the invention.

Exemplary embodiment of the present invention provide an AR filter selecting user equipment, including a display unit to display a real image including a target object and a plurality of filter icons; a user input unit to receive a user command, the user command including a selection of a target filter icon and a movement of the target filter icon; and a control unit to control the display unit to display the target object and filtered AR information corresponding to the target object.

Exemplary embodiment of the present invention provide an AR user equipment to select a filter including a display unit to display a real image including a target object and a plurality of filter icons; and a control unit to select and apply a target filter icon onto the target object and to control the display unit to prominently display the target object related to the target filter icon.

Exemplary embodiment of the present invention provide an AR service method for selecting a filter including displaying a real image including a target object and a plurality of filter icons; receiving a command to select a target filter icon; applying the target filter icon by moving the selected target filter icon onto a target object on the displayed image; and displaying the target object and information corresponding to the target object, in which the target filter icon is applied.

Exemplary embodiment of the present invention provide a method for selecting a filter in an AR service including displaying a real image including a target object and a plurality of filter icons; and prominently displaying a target object related to a selected target filter icon, wherein the target filter icon is selected according to an input by user.

Exemplary embodiment of the present invention provide an AR server for providing a user equipment with an AR service including a communication unit to receive information of a target filter icon selected and moved onto a target object by the user equipment and information of the target object; a database to store information related to the target object; an information extracting unit to extract information corresponding to the target filter icon from the database; and a control unit to control the communication unit to provide the user equipment with the extracted information.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 illustrates an augmented reality (AR) system with a multi-filter according to an exemplary embodiment of the invention.

FIG. 2, FIG. 3, FIG. 4, and FIG. 5 illustrate an AR filter selecting user equipment applying a target filter icon to an image displayed on a display unit according to an exemplary embodiment of the invention.

FIG. 6 illustrates an AR filter selecting user equipment to apply the same filter icon to different objects according to an exemplary embodiment of the invention.

FIG. 7 illustrates an AR filter selecting user equipment grouping a plurality of target filter icons and applying the group to an object according to an exemplary embodiment of the invention.

FIG. 8 illustrates an AR filter selecting user equipment applying different filter icons to the same target object according to an exemplary embodiment of the invention.

FIG. 9 illustrates an AR system including a multi-filter according to an exemplary embodiment of the invention.

FIG. 10 illustrates an AR filter selecting user equipment selecting one target filter icon according to an exemplary embodiment of the invention.

FIG. 11 illustrates an AR filter selecting user equipment selecting different target filter icons according to an exemplary embodiment of the invention.

FIG. 12 illustrates an AR filter selecting user equipment changing the attribute of a target filter icon and selecting an object according to an exemplary embodiment of the invention.

FIG. 13 is a flowchart illustrating an AR service method for selecting a filter according to an exemplary embodiment of the invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

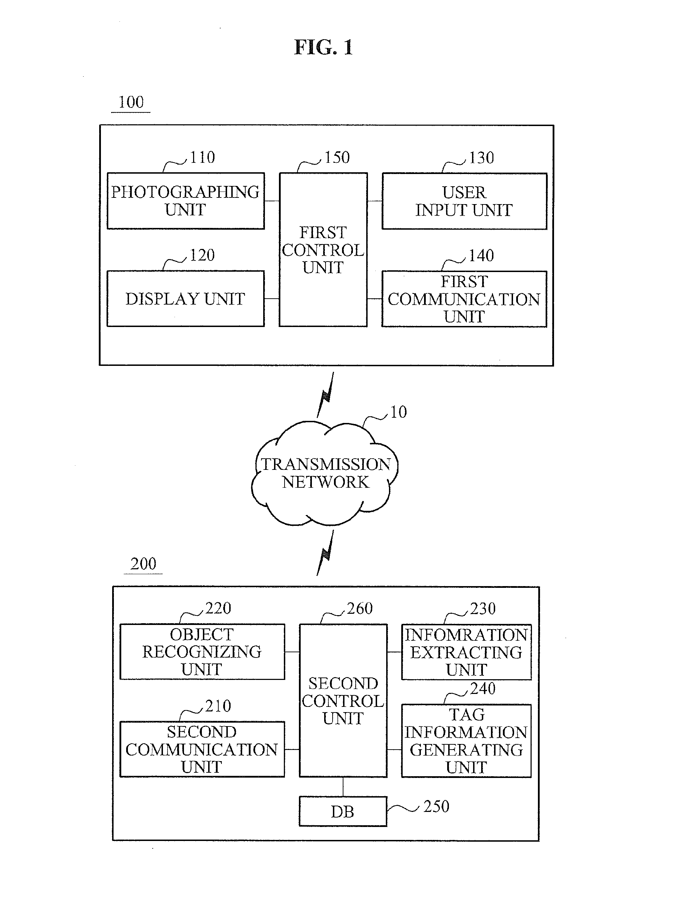

FIG. 1 illustrates an augmented reality (AR) system with a multi-filter according to an exemplary embodiment of the invention.

The AR system of FIG. 1 is a system for providing an AR service to an AR user equipment 100. In an example, the AR system may show a target object identified from a displayed image together with detailed information related to the target object. Further, a user may select a target object to be searched for and a target filter to be applied to the selected object. In an example, the target filter may be an AR filter, which may filter the types of AR data that may be provided to the user based on the applied target filter. Target filter may be filtered by various attributes, categories, or types of objects, such as shopping, restaurant, music, books, cars, all cars, photography or the like. Target filters may be represented by target filter icons that may be displayed on the AR user equipment 100. Also, the target object may be any object that may be identified in the displayed image in which a target filter may be applied to, such as a car, a building, a landmark, a location, or the like.

As shown in FIG. 1, an AR system includes a transmission network 10, an AR user equipment 100, and an AR server 200. Although FIG. 1 shows one AR user equipment 100 and one AR server 200 as an example, the present invention is not limited in this regard.

The transmission network 10 is a data transmission network and may support communication between the AR user equipment 100 and the AR server 200.

In an example, the AR user equipment 100 providing an AR service may include mobile electronic appliances capable of wired or wireless communication, for example, smart phones, laptop computers, and the like.

In an example, the AR server 200 may provide the AR user equipment 100 with AR information of a selected target object in response to the request of the AR user equipment 100. Also, the AR server 200 may extract AR information based on the target filter icon applied to the target object by the AR user equipment 100 from the AR information storage of the target object and provide the AR user equipment 100 with the extracted information.

Hereinafter, the AR user equipment 100 is described with reference to FIG. 1.

As shown in FIG. 1, the AR user equipment 100 includes a photographing unit 110, a display unit 120, a user input unit 130, a first communication unit 140, and a first control unit 150.

The photographing unit 110 photographs an object and obtains an image of the object. In an example, photographing unit 110 may be an embedded camera or an external camera. In addition, the photographing unit 110 may obtain a still image or a moving image. Further, the obtained image may be processed into a displayable signal by the photographing unit 110 or by a separate image processor.

The display unit 120 displays an image obtained by the photographing unit 110. In an example, the display unit 120 may include a display device, such as a liquid crystal display (LCD) or similar display devices. If the AR user equipment 100 provides a touch type user input unit 130, the display unit 120 may display a user interface (UI) for a touch panel.

The user input unit 130 is an operation panel for receiving an input of a user command. In an example, the user input unit 130 may include various kinds of interfaces for inputting commands, such as a button, a directional key, a touch panel and the like. A signal of the user command inputted through the user input unit 130 may be transmitted to the first control unit 150.

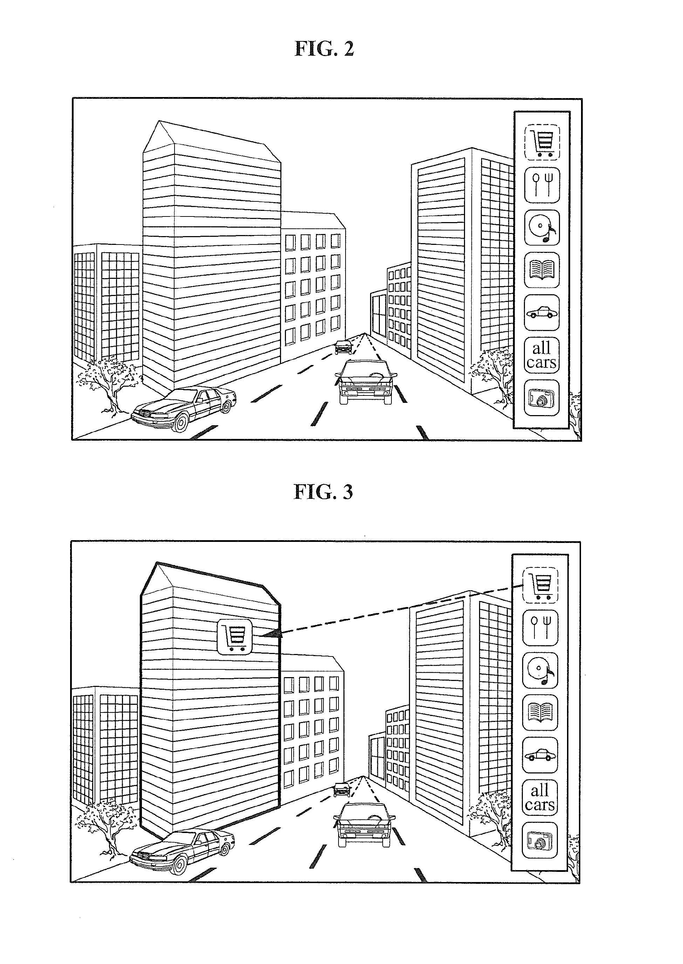

More particularly, the user input unit 130 may receive, from a user, a first command for selecting a target filter icon among a plurality of icons displayed on the display unit 120, and a second command for moving the selected target filter icon onto a target object on a displayed image. If the first and second commands are inputted, the target filter icon may be displayed together with a target object as shown in FIG. 3.

In an example, a user may select one target filter icon by touch using a touch panel and move the selected target filter icon onto a target object by a drag-and-drop scheme. That is, the user may touch a selected target filter icon, drag the icon onto a target object, and drop the icon when the icon reaches the target object.

Alternatively, the user may select a target filter icon by manipulation of a directional key or a tab key of an operation panel and move the icon to a target object.

The first communication unit 140 communicates with the AR server 200 via transmission network 10. In an example, the first communication unit 140 may include a physical module and software for communication. Further, the information provided by the AR user equipment 100 on the placement of the target filter icon on a target object selected on the displayed image (placement information) may be provided to the AR server 200. In addition, the category information of the target filter icon may be provided to the AR server 200.

The first control unit 150 controls the entire operation of the AR user equipment 100. In an example, the first control unit 150 may control the display unit 120 to display an image of the real world (real image) and a plurality of icons if the AR user equipment 100 operates at an AR service mode to provide an AR service. The real image may be an image of an object existing in a real environment, and may be obtained by the photographing unit 110. Also, the first control unit 150 may control the display unit 120 to display information corresponding to a selected target filter icon, together with the selected target object, if the first command and second command are inputted from the user input unit 130.

As shown in FIG. 1, the AR server 200 includes a second communication unit 210, an object recognizing unit 220, an information extracting unit 230, a tag information generating unit 240, a database (DB) 250, and a second control unit 260.

The second communication unit 210 communicates with the AR user equipment 100. In an example, the second communication unit 210 may receive information on a target filter icon selected by the AR user equipment 100 and information of a target object, on which the target filter icon was applied. The target filter icon may be applied if the filter icon is moved to overlap the target object in the displayed image where the target object is identified. In addition, the category information of the applied target filter icon may be provided.

The object recognizing unit 220 recognizes objects included in a real image provided by the AR user equipment 100. In an example, the object recognizing unit 220 may recognize the objects using an object recognition algorithm. Alternatively, the object recognizing unit 220 may recognize the objects using the received GPS information.

Also, the object recognizing unit 220 may recognize a target object by using placement information of the target filter icon provided by the AR user equipment 100. Further, if the selected target object on which a target filter icon is applied is recognized by the object recognizing unit 220, the target object may be identified as the recognized target object. Once recognized, the object recognizing unit 220 may generate detection information of the recognized target object. In addition, category information of the target filter icon may be provided by the AR user equipment 100. In an example, category information may include a shopping center, a car, a theater, and the like.

In an example, the detection information may be outline coordinate information of the target object or an image data of a highlighted outline of the target object. If the detection information is outline coordinate information of the target object, the first control unit 150 may prominently display an area of a corresponding coordinate on the real image displayed on the display unit 120. In an example, a target object may be prominently displayed with highlighted outlining of the target object, highlighting of the entire target object, or other conventional schemes to distinguish the target object from the other objects in the displayed image. Alternatively, if the detection information is an image data with a highlighted outline of the target object, the first control unit 150 may display the image data on the display unit 120 as is.

For the purpose of this application, an object that is "prominently" displayed means that the object is displayed in a more prominent manner than other objects. For example, an object that is "prominently" displayed may have a bold outline, or may be displayed more brightly compared with other objects in the display.

If category information of the target filter icon is received from the AR user equipment 100, the information extracting unit 230 may extract AR information corresponding to the target object on which target filter icon is applied from the DB 250 by applying the target filter icon to the target object recognized by the object recognizing unit 220.

The tag information generating unit 240 may generate an AR tag window using the extracted AR information.

The DB 250 may store AR information related for each target object. In an example, AR information may include various attributes that are related to the target object. If the target object is a clothing store, it may include name, address, hours of operation, and the like. If the target object is a car, it may include make, model, year, and the like.

The second control unit 260 may control the second communication unit 210 to provide outline information of the generated target object to the AR user equipment 100.

Also, the second control unit 260 may control the second communication unit 210 to provide the generated AR tag window to the AR user equipment 100.

Hereinafter, embodiments for displaying information corresponding to a target filter icon together with a target object on the display unit 120 are described with reference to FIG. 2, FIG. 3, FIG. 4, FIG. 5, FIG. 6, FIG. 7, and FIG. 8.

FIG. 2, FIG. 3, FIG. 4, and FIG. 5 illustrate an example of applying a target filter icon to a target object in a displayed image on the display unit 120.

If a real image is displayed and an AR service mode is selected, the first control unit 150 may control the display unit 120 to display a plurality of icons together with the real image, as shown in FIG. 2. If a user manipulates the user input unit 130 to select a target filter icon among the plurality of icons, and moves the selected target filter icon to a target object, the first control unit 150 may control the display unit 120 to display the target filter icon together with the target object, as shown in FIG. 3.

Before the target object is selected, that is, if the target filter icon is moved to the target object before selecting, the first control unit 150 may control the display unit 120 to prominently display the target object.

In an example, the first control unit 150 may enable a target object to be prominently displayed by a first method using the AR server 200 or alternatively, by a second method by itself.

According to the first method, if the target filter icon is moved to the target object by a drag and drop scheme, the first control unit 150 may control the AR server 200 to transmit placement information of the target filter icon on the target object. Accordingly, the first control unit 150 may control the first communication unit 140 to transmit the information together with data of a displayed real image and current global positioning system (GPS) information. In response, the first communication unit 140 may receive, from the AR server 200, detection information of the target object corresponding to the placement information of the target filter icon. The first control unit 150 may control the display unit 120 to prominently display the target object using the received detection information as shown in FIG. 3.

According to the second method, the first control unit 150 may detect a selected target object with reference to the placement information of the target filter icon and prominently display the detected target object. For example, the first control unit 150 may detect the outline of the target object using an outline detection algorithm, and may accordingly prominently display the selected target object.

After the selected target object is prominently displayed, or after the target filter icon is dragged to the target object, the user may drop the target filter icon onto the target object. If the target filter icon is dropped onto the target object, the first communication unit 140 may transmit information of the target object and information of the target filter icon to the AR server 200 under the control of the first control unit 150. The information of the target object may be coordinate information of the target object measured on the displayed real image. The information of the target filter icon may be category information.

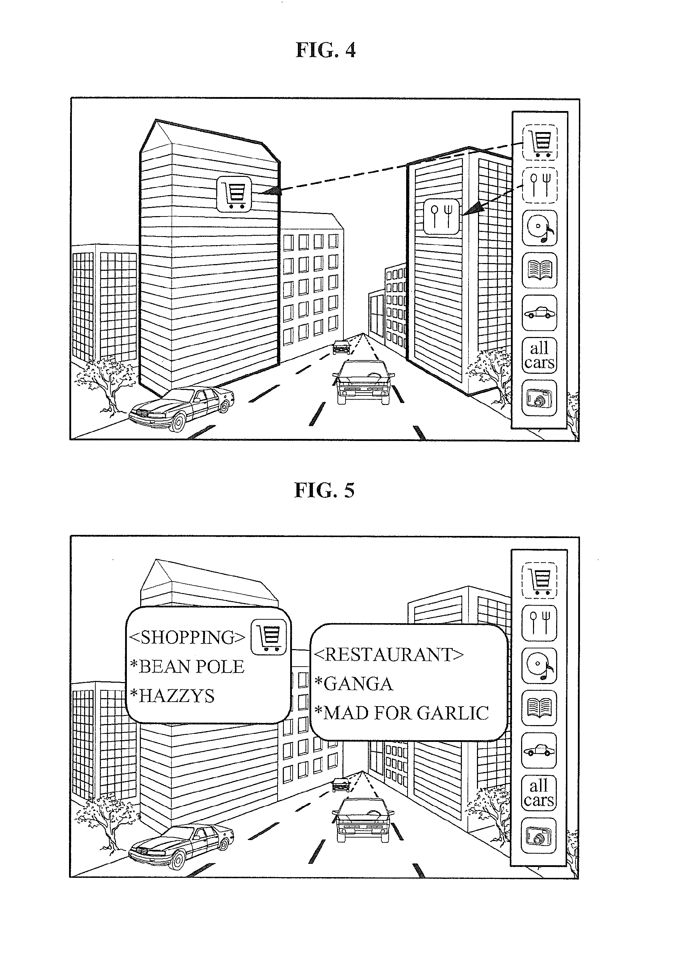

Also, the first communication unit 140 may receive, from the AR server 200, AR information corresponding to the target object in which target filter is applied. That is, the AR server 200 may extract AR information corresponding to the target object, and provide the extracted information to the first communication unit 140. In an example, the AR server 200 may provide the AR information to display on the display unit 120 in the form of a tag window as shown in FIG. 5.

Although the current embodiment shows a user selecting and moving a target filter icon to a target object using a drag-and-drop scheme, the user may select and move a target filter icon to a target object using an operation panel in the same way. That is, if the user selects a target filter icon using an operation panel and moves the selected target filter icon to a target object, the first communication unit 140 may receive, from the AR server 200, AR information corresponding to the target filter icon.

As shown in FIG. 4, the user may select a plurality of target filter icons on a real image and apply the plurality of selected target filter icons to multiple target objects.

If the user selects all of desired target filter icons to apply to the target objects, the first control unit 150 may display the received AR information together with the target objects on the display unit 120, as shown in FIG. 5. Accordingly, the AR information may be displayed in the form of a tag window.

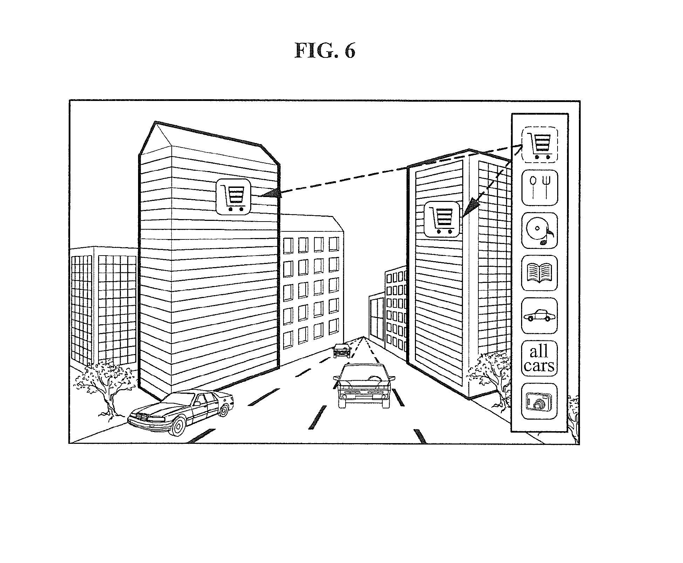

FIG. 6, FIG. 7, and FIG. 8 illustrate various embodiments for applying a target filter icon to an image displayed on the display unit 120.

FIG. 6 illustrates an AR filter selecting user equipment applying the same filter icon to different objects according to an exemplary embodiment of the invention.

Referring to FIG. 6, the user may manipulate the user input unit 130 to select a target filter icon and sequentially move the selected target filter icon to a plurality of objects. In an example, the selected target filter icon may be moved to a plurality of objects on a real image by manipulation of the user input unit 130. More specifically, the user may move the selected target filter icon to the objects using a drag-and-drop scheme or through an operation panel. Accordingly, AR information corresponding to the selected target filter icon of each object may be displayed on the display unit 120. In this instance, the displayed AR information may be provided from the AR server 200 in such a way as described with reference to FIG. 2, FIG. 3, and FIG. 4.

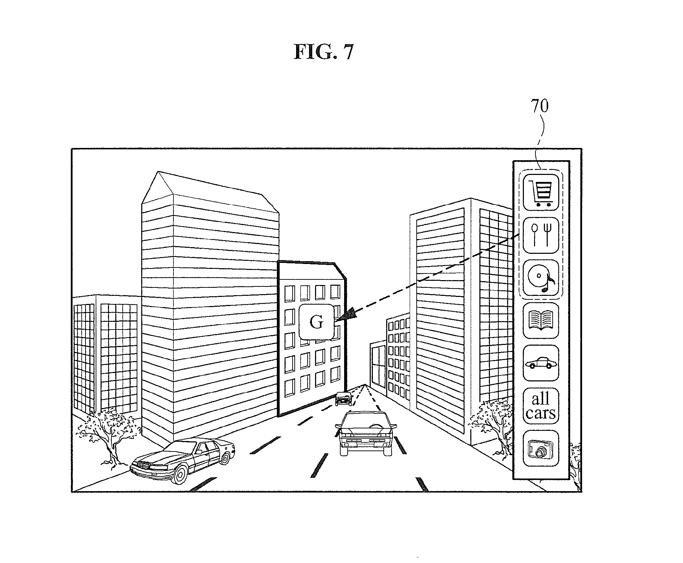

FIG. 7 illustrates an AR filter selecting user equipment grouping a plurality of target filter icons and applying the group to an object according to an exemplary embodiment of the invention.

Referring to FIG. 7, multiple target filter icons are selected. In an example, the user may manipulate the user input unit 130 to group multiple target filter icons into a group 70. The user may move the group 70 to a target object to apply the group of filters. More specifically, a plurality of target filter icons in the group 70 may be simultaneously moved to the target object. Thus, AR information corresponding to the group 70 may be displayed on the display unit 120. In this instance, the AR information may be provided from the AR server 200 in such a way as described with reference to FIG. 2, FIG. 3, and FIG. 4.

In addition, although not illustrated, the first control unit 150 may automatically apply the multiple target filters included in group 70, to another target object with an attribute similar to the target object. Accordingly, the first control unit 150 may automatically apply the group 70 to a similar second target object and display AR information of the second object corresponding to the target filter icons in the group 70.

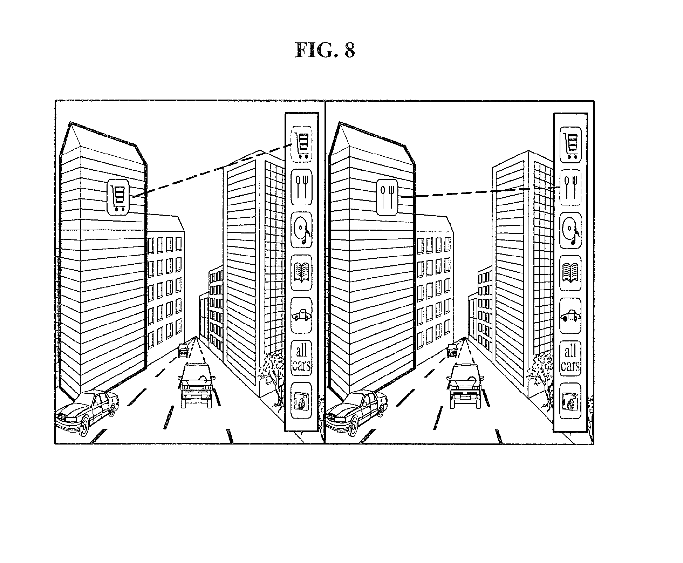

FIG. 8 is a view illustrating an AR filter selecting user equipment applying different filter icons to the same target object according to an exemplary embodiment of the invention.

As shown in FIG. 8, a real image may be duplicated to generate a plurality of real images, which are displayed on the display unit 120. The user may manipulate the user input unit 130 to select different target filter icons for each of the duplicated images, and move each of the selected target filter icons to the same target object on the plurality of real images. In an example, the first of the duplicated image may apply a shopping filter icon to the target object, and the second of the duplicated image may apply a dining filter icon to the same target object in the second image. Accordingly, the first control unit 150 may receive AR information corresponding to the target filter icons from the AR server 200 and display the information together with the corresponding target object for each of the duplicated images.

In an example, if a previously stored target object is selected on a real image displayed on the display unit 120, the first control unit 150 may automatically display the previously applied filter icon to the target object. For this purpose, the first control unit 150 may separately store identity information of a filter icon applied to the target object in a memory unit (not shown) for each target object. The method for storing target objects and the applied target filter may include, for example, touching a target object for at least a predetermined time, rapidly clicking the target object at least twice, and the like.

Alternatively, if the user selects a target object on a real image displayed on the display unit 120 without applying a target filter icon, the first control unit 150 or the AR server 200 may analyze AR information of the specific object and obtain target filter information related to the specific object. Accordingly, the first control unit 150 may generate a target filter icon with reference to the related target filter information and display the target filter icon on the display unit 120 in the form of a context menu.

Alternatively, the first control unit 150 may automatically generate a filter icon list, as opposed to a selection by the user. Alternatively, filter icon may be generated as a result of user's command or confirmation. For example, if sequential filtering is set, the first control unit 150 may automatically list the filters related to information of the target object based on the filters most frequently selected by the user in an order to generate a filter icon list, and to display the filter icon list.

Alternatively, the first control unit 150 may generate a bundle of usable filter icons in the AR user equipment 100. In an example, the generated bundle of useable filter icons with an attribute added by the user may be transmitted to another user. For example, if an identifier (ID) of a receiver is displayed on the display unit 120, the first control unit 150 may control the first communication unit 140 to transmit the bundle to the receiver, in response to the request of the user.

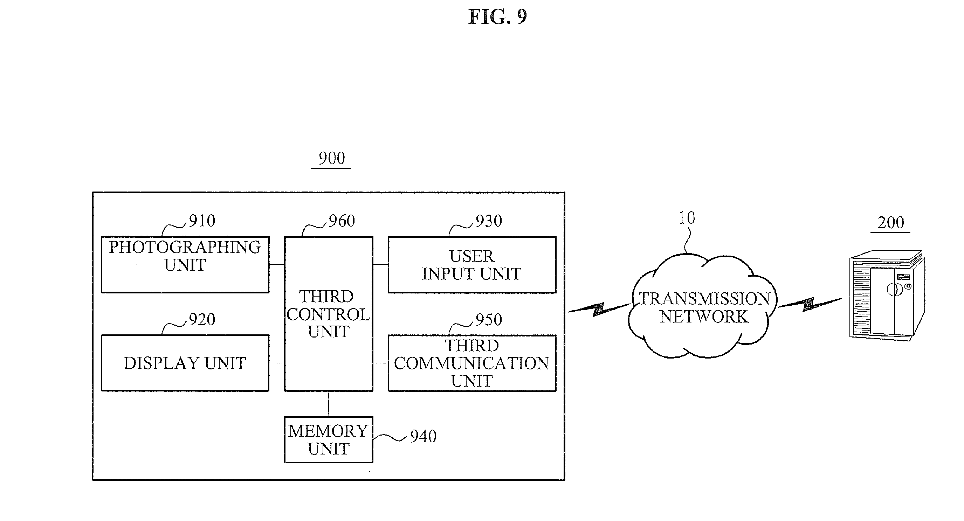

FIG. 9 illustrates an AR system including a multi-filter according to an exemplary embodiment of the invention.

Referring to FIG. 9, the AR system may include a transmission network 10, an AR user equipment 900 and an AR server 200. The transmission network 10, the AR user equipment 900 and the AR server 200 are similar to the transmission network 10, the AR user equipment 100 and the AR server 200 of FIG. 1. A block for providing a nearly identical function is designated with the same reference number.

While the AR user equipment 100 may have a main function of displaying AR information corresponding to a target filter icon applied to an object, the AR user equipment 900 may have a main function to filtering an object corresponding to a target filter icon selected by a user and to display the filtered object.

To filter an object corresponding to a target filter icon selected by a user and to display the filtered object, the AR user equipment 900 may include a photographing unit 910, a display unit 920, a user input unit 930, a memory unit 940, a third communication unit 950, and a third control unit 960. The photographing unit 910, the display unit 920, the user input unit 930 and the third communication unit 950 may have the basic functions equal to those of the photographing unit 110, the display unit 120, the user input unit 130, and the first communication unit 140 of FIG. 1, and thus detailed description thereof is omitted herein.

The display unit 920 may display a real image with at least one object and a plurality of filter icons.

The memory unit 940 may store algorithms and software used to detect a target object corresponding to a target filter icon.

If a target filter icon is selected among the plurality of displayed filter icons according to an input by the user, the third communication unit 950 may directly or indirectly filter a target object related to the target filter icon on the displayed real image and prominently display the filtered target object.

Alternatively, the third control unit 960 may control the third communication unit 950 to transmit category information of the selected target filter icon applied to the selected target object and image data of the target object to the AR server 200. The third control unit 960 may then receive outline image information of the target object related to the target filter icon received from the AR server 200 via the third communication unit 950. The third control unit 960 may control the display unit 920 to prominently display the target object using the received outline image information.

The AR server 200 may analyze category information of the target filter icon received from the AR user equipment 900 and the real image data, and extract outline information of the target object from data storage of the real image.

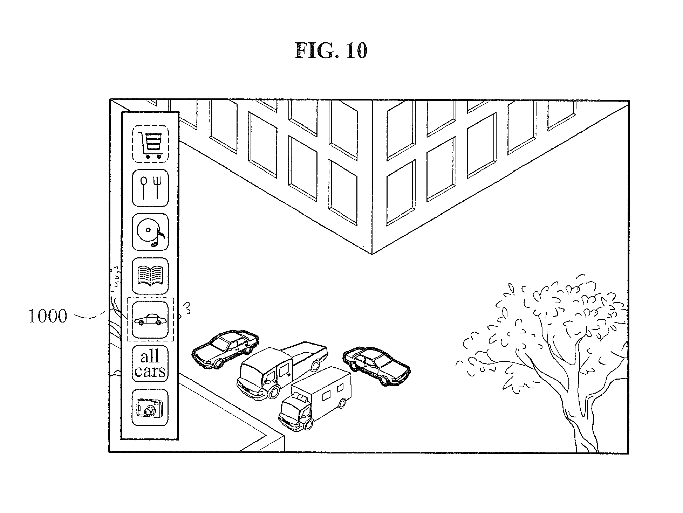

FIG. 10, FIG. 11, and FIG. 12 illustrate various embodiments for selecting a target filter icon and applying them to corresponding objects.

FIG. 10 is a view illustrating an AR filter selecting user equipment selecting one target filter icon according to an exemplary embodiment of the invention.

Referring to FIG. 10, the user may select a target filter icon 1000. The method for selecting a target filter icon may include touching the target filter icon 1000 for a set time, and rapidly touching the target filter icon 1000 at least twice. If the target filter icon is selected, the third control unit 960 may prominently display an object corresponding to the selected target filter icon. For example, if the target filter icon 1000 is a filter for filtering out a yellow car, the third control unit 960 may prominently display a yellow car on the displayed real image.

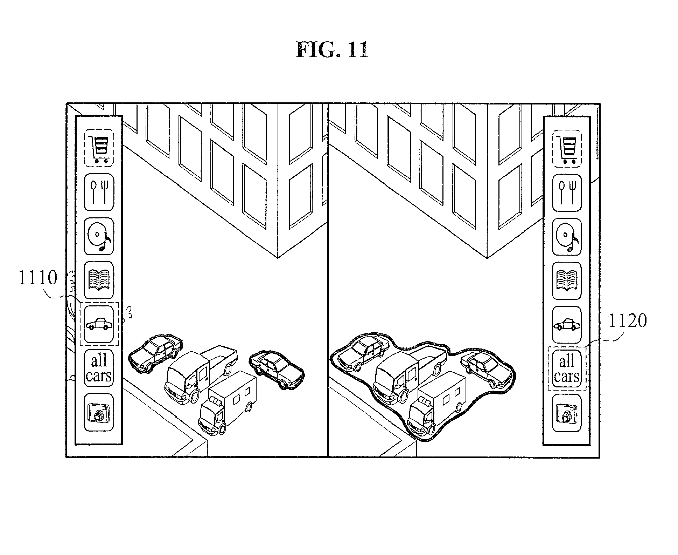

FIG. 11 illustrates an AR filter selecting user equipment selecting different target filter icons according to an exemplary embodiment of the invention.

Referring to FIG. 11, a real image may be duplicated to generate a plurality of real images, a first real image and a second real image. The plurality of real images may be displayed on the display unit 920 side-by-side as shown in FIG. 11. Alternatively, the plurality of images may be shown from top-to-bottom or as separate images that may be toggled back and forth from the first image to the second image. In an example, the user may manipulate the user input unit 930 to simultaneously or sequentially select target filter icons 1110 and 1120. Accordingly, the third control unit 960 may prominently display objects corresponding to the target filter icon 1110 on a left first real image, and objects corresponding to the target filter icon 1120 on a right second real image as shown in FIG. 11.

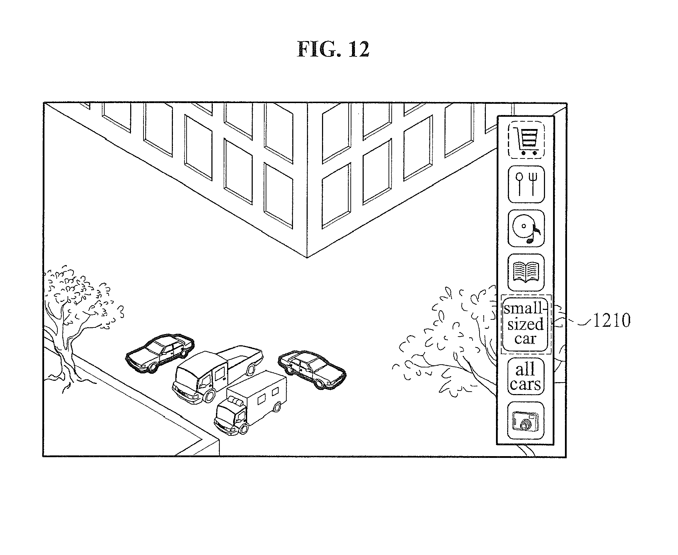

FIG. 12 illustrates an AR filter selecting user equipment changing the attribute of a target filter icon and selecting an object according to an exemplary embodiment of the invention.

Referring to FIG. 12, a user may set an attribute of the target filter icon. In an example, if the target filter icon 1110 of FIG. 11 is a car, the user may change an attribute of the target filter icon 1110 from the 'car' to a 'small-sized car'. The attribute 'small-sized car' may be displayed or may not be displayed on the target filter icon 1210. If the target filter icon 1210 is selected, the third control unit 960 may filter objects meeting the condition of 'a small-sized car among cars' and display the filtered object.

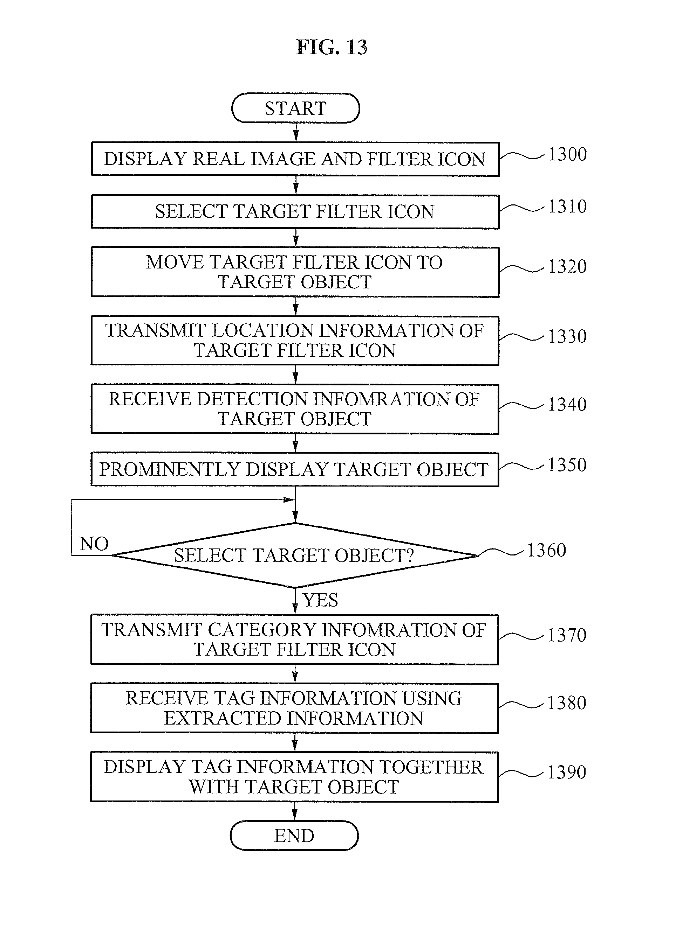

FIG. 13 is a flowchart illustrating an AR service method for selecting a filter according to an exemplary embodiment of the invention.

Each operation of the process of FIG. 13 may be performed by the AR user equipment 100 of FIG. 1.

The AR user equipment may display a real image and a plurality of filter icons, in operation 1300. The AR user equipment may select a target filter icon among the plurality of filter icons according to a command by a user, in operation 1310.

The AR user equipment may move the selected target filter icon to a target object on the real image according to the command by the user, in operation 1320. Accordingly, the AR user equipment may display the target object from the real image with the applied target filter icon as shown in FIG. 3. In an example, the target filter icon may be selected and moved using a drag-and-drop scheme or by manipulation of an operation panel.

If the target filter icon is applied to the target object by dragging and dropping the target filter icon on the target object, the AR user equipment may transmit placement information of the target filter icon applied on a target object to the AR server in operation 1330. Further, the AR user equipment 100 may transmit the placement information together with image data of the target object in operation 1330.

In response to the transmitted information provided in operation 1330, the AR user equipment 100 may receive detection information of the target object from the AR server 200 in operation 1340. The detection information may be desired to prominently display the target object.

The AR user equipment 100 may prominently display the selected target object using the received detection information in operation 1350.

If the target object is selected in operation 1360, that is, if the target filter icon is applied onto the target object, the AR user equipment 100 may transmit placement information of the target filter icon where it was applied onto the target object and category information of the target filter icon to the AR server in operation 1370.

The AR user equipment 100 may also receive, from the AR server 200, AR information related to the target object corresponding to the applied target filter in operation 1380. Alternatively, tag information using the AR information may be provided to the AR user equipment 100. The tag information using the AR information may be data for providing the AR information as a tag window.

The AR user equipment may display the received AR information or tag information together with the target object, in operation 1390.

According to the embodiments of the present invention, a target filter may be virtualized as an icon and movable using a drag-and-drop scheme, and thereby may improve ease of use. Additional functions may be provided, for example, applying a specific target filter to a specific target object, applying a specific target filter to a section on a screen, applying different target filters to the duplicate images, setting an attribute of a filter by a user, and the like, so that the user may more easily and quickly find information about objects.

The disclosure can also be embodied as computer readable codes on a computer readable recording medium. The computer readable recording medium may be any data storage device that can store data which can be thereafter read by a computer system.

Examples of the computer readable recording medium may include read-only memory (ROM), random-access memory (RAM), CD-ROMs, magnetic tapes, floppy disks, optical data storage devices, and carrier waves such as data transmission through the Internet. The computer readable recording medium can also be distributed over network coupled computer systems so that the computer readable code is stored and executed in a distributed fashion.

It will be apparent to those skilled in the art that various modifications and variation may be made in the present invention without departing from the spirit or scope of the invention. Thus, it is intended that the present invention cover the modifications and variations of this invention provided they come within the scope of the appended claims and their equivalents.
An augmented reality filter selecting user equipment, includes a display unit display to display a real image including a target object and a plurality of filter icons, a user input unit to receive a user command, the user command including a selection of a target filter icon and a movement of the target filter icon, and a control unit to control the display unit to display the target object and filtered AR information corresponding to the target object. A method for selecting a filter includes displaying a real image including a target object and a plurality of filter icons, receiving a command to select a target filter icon, applying the target filter icon by moving the selected target filter icon onto a target object on the displayed image, and displaying the target object and information corresponding to the target object, in which the target filter icon is applied.

## Claims

1. An augmented reality (AR) filter selecting user equipment, comprising:
a display unit to display a real image comprising a target object and a plurality of filter icons;
a user input unit to receive a user command, the user command comprising a selection of a target filter icon and a movement of the target filter icon ; and
a control unit to control the display unit to display the target object and filtered AR information corresponding to the target object.

2. The AR user equipment of claim 1, further comprising:
a communication unit to transmit information on a moved location of the target filter icon to an AR server and to receive detection information of the target object corresponding to the location of the target filter icon from the AR server,
wherein the control unit prominently displays the target object using the received detection information, the target object preferably being prominently displayed by a bold outline of the target object or displaying the target object more brightly compared with other object in the display.

3. The AR user equipment of claim 1 or 2, wherein the control unit detects the target object with reference to the moved location of the target filter icon, and prominently displays the detected target object.

4. The AR user equipment of any of claims 1 to 3, wherein the user input unit is a touch panel, and the user applies the target filter icon by touching and dragging the selected target filter icon onto the target object, and, preferably, the communication unit transmitting information of the target object and information of the target filter icon to the AR server and receiving information corresponding to the target filter icon from the AR server, if the target filter icon is applied to the target object.

5. The AR user equipment of any of claims 1 to 4, wherein the user input unit is an operation panel, and the operation panel receives a user command to move the target filter icon onto the target object.

6. The AR user equipment of any of claims 1 to 5, wherein the user input unit receives a user command to move the selected target filter icon to a plurality of target objects on the real image.

7. The AR user equipment of any of claims 1 to 6, wherein if a plurality of target filter icons are selected the user input unit receives a user command to group the plurality of target filter icons and to apply the grouped target filter icons onto the target object, and, preferably, the control unit applying the plurality of target filter icons in the group to an object with a similar attribute to the target object.

8. The AR user equipment of any of claims 1 to 7, wherein the display unit display the real image as a first image and a second image, the user input unit receives a first user command to select a first filter icon to apply and to move the first filter icon to the target object on the first image, and the user input unit receives a second user command to select a second filter icon to apply and to move the second filter icon to the same target object on the second image,
wherein the control unit controls the display unit to display information corresponding to the first target object, in which first filter icon is applied, and the second target object, in which second filter icon is applied.

9. The AR user equipment of any of claims 1 to 8, wherein the control unit displays a filter icon list related to the target object on the display unit if the target object is selected.

10. The AR user equipment of any of claims 1 to 9, wherein the control unit displays a filter icon list applied to the target object on the display unit if the target object on the displayed image is selected.

11. An AR service method for selecting a filter, comprising:
displaying a real image comprising a target object and a plurality of filter icons;
receiving a command to select a target filter icon;
applying the target filter icon by moving the selected target filter icon onto a target object on the displayed image; and
displaying the target object and information corresponding to the target object.

12. The AR service method of claim 11, wherein the target filter icon and the target object are selected by the user.

13. The AR service method of claim 11 or 12, wherein applying of the target filter comprises receiving a user command to move the target filter icon onto the target object, the user command comprising a drag-and-drop command,
and, preferably further comprising:
transmitting information of the target filter icon to the AR server if the target filter icon is applied onto the target object; and
receiving information corresponding to the target filter icon from the AR server.

14. The AR service method of any of claims 11 to 13, wherein applying of the target filter comprises the user manipulating a physical operation panel to move the target filter icon onto the target object.

15. An augmented reality (AR) server for providing a user equipment with an AR service, comprising:
a communication unit to receive information of a target filter icon selected and
moved onto a target object by the user equipment and information of the target object;
a database to store information related to the target object;
an information extracting unit to extract information corresponding to the target filter icon from the database; and
a control unit to control the communication unit to provide the user equipment with the extracted information.

16. An augmented reality (AR) user equipment to select a target filter, comprising:
a display unit to display a real image comprising a target object and a plurality of filter icons; and
a control unit to select and apply a target filter icon onto the target object, and to control the display unit to prominently display the target object related to the target filter icon.

17. The AR user equipment of claim 15, wherein if an attribute of the target filter icon is changed by the user, the control unit prominently displays a target object related to the changed attribute on the display unit.

18. The AR user equipment of claim 15 or 16, further comprising:
a communication unit to transmit information of the selected target filter icon to the AR server and to receive detection information of the target object related to the target filter icon from the AR server,
wherein the control unit prominently displays the target object using the received detection information.

19. A method for selecting a filter in an augmented reality (AR) service, comprising:
displaying a real image comprising a target object and a plurality of filter icons; and
prominently displaying a target object related to a selected target filter icon, wherein the target filter icon is selected according to an input by a user.

20. The AR service method of claim 19, further comprising:
changing an attribute of the target filter icon; and
prominently displaying a target object related to the changed attribute.
